# EUROPÄISCHE PATENTSCHRIFT

(11) **EP 3 266 684 B1**
(45) Veröffentlichungstag und Bekanntmachung des Hinweises auf die Patenterteilung: **01.01.2020**
(21) Anmeldenummer: 17180080.8
(22) Anmeldetag: 06.07.2017
(51) Int. Cl.: B62D 21/18, B62D 31/00, B62D 63/02, B60P 3/32

(54) **REISEFAHRZEUGKAROSSERIE, INSBESONDERE REISEMOBILKAROSSERIE**
TRAVEL VEHICLE BODY, IN PARTICULAR MOTOR HOME BODY
CARROSSERIE DE VÉHICULE DE TOURISME, EN PARTICULIER DE CARROSSERIE DE CAMPING-CAR

(30) Priorität: 06.07.2016 DE 102016112416
(43) Veröffentlichungstag der Anmeldung: 10.01.2018
(73) Patentinhaber: Scolotech GmbH, 88709 Meersburg (DE)
(72) Erfinder: Schuler, Karl-Heinz, 88255 Köpfingen über Baienfurt (DE)
(74) Vertreter: Daub, Thomas

(56) Entgegenhaltungen:
- EP-A2- 2 722 225
- WO-A1-2014/121856
- DE-A1- 4 133 401
- DE-U1- 9 312 345
- US-A1- 2014 151 141

## Beschreibung

### Stand der Technik

Die Erfindung betrifft eine Reisefahrzeugkarosserie, insbesondere eine Reisemobilkarosserie nach dem Oberbegriff des Patentanspruchs 1.

Eine gattungsgemäße Reisefahrzeugkarosserie ist aus der WO2014/121856 bekannt.

In der Veröffentlichung EP 2 722 225 A2 ist bereits eine Reisefahrzeugkarosserie, insbesondere eine Reisemobilkarosserie, mit zumindest einer Unterbodeneinheit und mit zumindest einer Oberbodeneinheit, vorgeschlagen worden, die insbesondere zu einer selbsttragenden Anbindung einer Hinterachseinheit an eine Fahrerkabineneinheit vorgesehen sind, und die einen Stauraum begrenzen, der zumindest teilweise zwischen der Hinterachseinheit und der Fahrerkabineneinheit angeordnet ist und der sich in zumindest einem Bereich durchgängig von einer ersten Karosserielängsseite bis zu einer zweiten Karosserielängsseite erstreckt.

Die Aufgabe der Erfindung besteht insbesondere darin, eine gattungsgemäße Vorrichtung mit verbesserten Eigenschaften hinsichtlich einer Nutzbarkeit des Stauraums bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Reisefahrzeugkarosserie, insbesondere von einer Reisemobilkarosserie, mit zumindest einer Unterbodeneinheit und mit zumindest einer Oberbodeneinheit, die insbesondere zu einer selbsttragenden Anbindung einer Hinterachseinheit an eine Fahrerkabineneinheit vorgesehen sind, und die einen Stauraum begrenzen, der zumindest teilweise zwischen der Hinterachseinheit und der Fahrerkabineneinheit angeordnet ist und der sich in zumindest einem Bereich durchgängig von einer ersten Karosserielängsseite bis zu einer zweiten Karosserielängsseite erstreckt.

Erfindungsgemäß weist die Unterbodeneinheit einen Unterboden auf, der eine zumindest im Wesentlichen ebene Unterbodenfläche ausbildet, die sich durchgehend über zumindest einen Großteil einer Erstreckung von der Hinterachseinheit zur Fahrerkabineneinheit erstreckt. Dadurch kann vorteilhaft ein besonders großer hindernisfreier Stauraum bereitgestellt werden. Weiterhin kann eine Zugänglichkeit des Stauraums besonders vorteilhaft erhöht werden. Unter einer "Reisefahrzeugkarosserie" soll in diesem Zusammenhang insbesondere eine Karosserie für ein Reisefahrzeug, insbesondere für ein Reisemobil, verstanden werden.

Die "Unterbodeneinheit" ist insbesondere dazu vorgesehen, den Stauraum von einer Fahrzeugumgebung, insbesondere in Richtung eines Untergrunds, wie beispielsweise einer Straße, zu trennen. Die "Oberbodeneinheit" ist insbesondere dazu vorgesehen, den Stauraum von einem Reisefahrzeugwohnraum zu trennen. Die Oberbodeneinheit umfasst vorzugsweise einen Oberboden. Der Oberboden bildet vorteilhaft zumindest bereichsweise einen Fussboden eines Reisefahrzeugwohnraums aus. Der Oberboden ist vorzugsweise in Leichtbauweise und/oder in Sandwichbauweise hergestellt. Besonders vorteilhaft ist der Oberboden zumindest zu einem Großteil metallfrei ausgebildet. Besonders vorteilhaft ist der Oberboden über eine vollständige Breite eben ausgebildet. Die Unterbodeneinheit ist insbesondere in eine Vertikalrichtung versetzt zur Oberbodeneinheit angeordnet. Von einem Untergrund aus betrachtet, ist die Oberbodeneinheit oberhalb der Unterbodeneinheit angeordnet. Unter "selbsttragend" soll in diesem Zusammenhang insbesondere eine für einen Fahr- und/oder Wohnbetrieb ausreichend statische Eigenschaft und/oder Stabilität aufweisend verstanden werden.

Besonders vorteilhaft ist die Reisefahrzeugkarosserie frei von Fahrzeuglängsträgern ausgebildet. Die Hinterachseinheit umfasst vorzugsweise zumindest eine Hinterachse, zumindest ein Hinterachslager und/oder zumindest eine Hinterachsanbindung. Die Hinterachse ist zu einer Aufnahme von zumindest zwei Fahrzeughinterreifen vorgesehen. Die Fahrerkabineneinheit bildet insbesondere eine Fahrerkabine aus. Ein Fahrzeugmotor ist vorteilhaft im Bereich der Fahrerkabineneinheit angeordnet. Die Fahrerkabineneinheit ist vor der Hinterachseinheit angeordnet. Eine Vorwärtsrichtung weist von der Hinterachseinheit zur Fahrerkabineneinheit.

Der Stauraum ist insbesondere zu einer Aufnahme von Reisegegenständen, wie insbesondere von Tischen, Stühlen, Fahrrädern, Sonnenschirmen etc., vorgesehen. Weiterhin vorteilhaft ist der Stauraum zur Aufnahme von Fahrzeuggegenständen, wie insbesondere Gasflaschen, Trittstufen, Batterien etc. vorgesehen. Unter "durchgängig" soll in diesem Zusammenhang insbesondere vollständig unterbrechungsfrei verstanden werden. Unter einer "Karosserielängsseite" soll in diesem Zusammenhang insbesondere eine Längsseite verstanden werden, die sich zumindest im Wesentlichen parallel zur Vorwärtsrichtung erstreckt. Die erste Karosserielängsseite verläuft insbesondere parallel zur zweiten Karosserielängsseite. Die Karosserielängsseite verläuft insbesondere entlang eines Kantenbereichs des Unterbodens. Der Kantenbereich erstreckt sich maximal 50 cm, bevorzugt maximal 20 cm, besonders bevorzugt maximal 10 cm um eine Längskante bzw. eines Außenrands des Unterbodens. Insbesondere schließt die Längskante und/oder der Außenrand den Unterboden in eine Querrichtung ab.

Der Unterboden bildet vorzugsweise eine Bodenplatte aus. Der Unterboden ist vorzugsweise in Leichtbauweise und/oder in Sandwichbauweise hergestellt. Besonders vorteilhaft ist der Unterboden zumindest zu einem Großteil metallfrei ausgebildet. Unter "zumindest im Wesentlichen eben" soll in diesem Zusammenhang insbesondere von einer Haupterstreckungsebene mit einer Abweichung von weniger als 2 cm, bevorzugt von weniger als 0,5 cm, besonders bevorzugt von weniger als 0,1 cm verstanden werden. Unter "zumindest einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Unter einer "Erstreckung" soll in diesem Zusammenhang insbesondere ein Mindestabstand, insbesondere in eine Längsrichtung, verstanden werden. Die Längsrichtung erstreckt sich insbesondere parallel zur Vorwärtsrichtung. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Erfindungsgemäß weist die Unterbodeneinheit einen ersten Unterzug auf, der entlang der ersten Karosserielängsseite verläuft und dass die Unterbodeneinheit einen zweiten Unterzug aufweist, der entlang der zweiten Karosserielängsseite verläuft. Dadurch kann eine besonders stabile Grundstruktur der Unterbodeneinheit, bei einem gleichzeitig großen Stauraum erzielt werden. Unter einem "Unterzug" soll in diesem Zusammenhang insbesondere eine Längsleiste verstanden werden, die dazu vorgesehen ist, an einem Seitenrand des Unterbodens angeordnet zu werden. Weiterhin ist der erste Unterzug und/oder der zweite Unterzug dazu vorgesehen, den Unterboden zu versteifen und/oder zu tragen. Der Unterzug ist vorteilhaft zumindest teilweise aus Metall ausgebildet.

Erfindungsgemäß sind der erste Unterzug und der zweite Unterzug zumindest im Bereich des Unterbodens frei von Querstreben ausgebildet. Dadurch kann der Stauraum besonders gut zugänglich ausgebildet werden. Ferner kann eine Teilevielfalt und ein Gesamtgewicht der Reisefahrzeugkarosserie vorteilhaft reduziert werden. Unter einer "Querstrebe" soll in diesem Zusammenhang insbesondere eine Strebe verstanden werden, die sich in einer Haupterstreckungsrichtung zumindest im Wesentlichen parallel zu einer Querrichtung erstreckt. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Unter einer "Querrichtung" soll in diesem Zusammenhang insbesondere eine Richtung verstanden werden, die sich quer zur Längsrichtung und parallel zur Unterbodenfläche erstreckt.

Des Weiteren wird vorgeschlagen, dass der Unterboden zumindest eine Bodenzugausnehmung umfasst, die zu einer zumindest teilweisen Aufnahme des ersten Unterzugs vorgesehen ist. Dadurch kann der Unterzug vorteilhaft kompakt und stabil mit dem Unterboden verbunden werden. Zusätzlich wird vorgeschlagen, dass der Unterboden zumindest eine weitere Bodenzugausnehmung umfasst, die zu einer zumindest teilweisen Aufnahme des zweiten Unterzugs vorgesehen ist. Die Bodenzugausnehmung ist in einer von der Unterbodenfläche abgewandten Seite des Unterbodens angeordnet. Die weitere Bodenzugausnehmung ist in der von der Unterbodenfläche abgewandten Seite des Unterbodens angeordnet.

Erfindungsgemäß umfasst die Reisefahrzeugkarosserie zumindest eine erste Außenstrebe, die sich an der ersten Karosserielängsseite von einem Außenrand des Unterbodens zu einem Außenrand der Oberbodeneinheit erstreckt, wobei die zumindest eine erste Außenstrebe schräg zu einer Vertikalrichtung der Unterbodenfläche verläuft. Hierdurch kann ein besonders großer Stauraum, bei einer gleichzeitig kleinen Unterbodenfläche erzielt werden. Ein optisches Erscheinungsbild der Reisefahrzeugkarosserie kann ebenfalls verbessert werden. Vorzugsweise schließt die zumindest eine erste Außenstrebe einen spitzen Winkel zur Vertikalrichtung der Unterbodenfläche ein. Weiterhin vorteilhaft schließt die zumindest eine erste Außenstrebe in Längsrichtung einen rechten Winkel mit der Unterbodenfläche ein. Besonders vorteilhaft schließt die zumindest eine erste Außenstrebe in Querrichtung einen spitzen Winkel mit der Unterbodenfläche ein. Insbesondere verläuft die Vertikalrichtung parallel zu einer Senkrechten einer Haupterstreckungsebene der Unterbodenfläche.

Ferner wird vorgeschlagen, dass die Reisefahrzeugkarosserie zumindest eine zweite Außenstrebe, die sich an der zweiten Karosserielängsseite von einem Außenrand des Unterbodens zu einem Außenrand der Oberbodeneinheit erstreckt, wobei die zumindest eine erste Außenstrebe und die zumindest eine zweite Außenstrebe vom Unterboden in Richtung der Oberbodeneinheit voneinander in eine Querrichtung divergieren. Dadurch kann ein besonders gut zugänglicher Stauraum erreicht werden. Weiterhin vorteilhaft schließt die zumindest eine zweite Außenstrebe in Längsrichtung einen rechten Winkel mit der Unterbodenfläche ein. Besonders vorteilhaft schließt die zumindest eine zweite Außenstrebe in Querrichtung einen spitzen Winkel mit der Unterbodenfläche ein.

Des Weiteren wird vorgeschlagen, dass die Unterbodeneinheit zumindest einen ersten Seitenboden umfasst, der am Unterboden seitlich anliegt und einen stumpfen Winkel mit dem Unterboden einschließt. Dadurch kann ein nutzbarer Stauraum vorteilhaft erhöht werden und eine seitliche Bodenfreiheit beibehalten werden. Zudem wird vorgeschlagen, dass die Unterbodeneinheit zumindest einen zweiten Seitenboden umfasst, der am Unterboden seitlich anliegt und einen stumpfen Winkel mit dem Unterboden einschließt.

Weiterhin wird vorgeschlagen, dass die Unterbodenfläche von der ersten Karosserielängsseite bis zur zweiten Karosserielängsseite und über zumindest einen Großteil der Erstreckung von der Hinterachseinheit zur Fahrerkabineneinheit vollständig eben ausgebildet ist. Dadurch kann der Stauraum besonders einfach be- und/oder entladen werden. Unter "vollständig eben" soll in diesem Zusammenhang insbesondere glatt und/oder frei von Erhebungen oder Ausnehmungen verstanden werden.

Zudem wird vorgeschlagen, dass die Oberbodeneinheit zumindest eine Querstrebe umfasst, die zu einer Verbindung zweier Oberzüge vorgesehen sind, und die seitlich über die Unterbodenfläche herausragen. Dadurch kann der Stauraum besonders groß und gut zugänglich ausgebildet werden. Weiterhin kann eine besonders hohe Steifigkeit und gute statische Eigenschaften der Reisefahrzeugkarosserie erzielt werden. Die Oberbodeneinheit umfasst insbesondere die zwei Oberzüge. Unter einem "Oberzug" soll in diesem Zusammenhang insbesondere eine Längsleiste verstanden werden, die dazu vorgesehen ist, an einem Seitenrand des Oberbodens angeordnet zu werden. Weiterhin ist der erste Oberzug und/oder der zweite Oberzug dazu vorgesehen, den Oberboden zu versteifen und/oder zu tragen. Der Oberzug ist vorteilhaft zumindest teilweise aus Metall ausgebildet.

Ferner wird ein Reisefahrzeug, insbesondere ein Reisemobil, mit einer erfindungsgemäßen Reisefahrzeugkarosserie vorgeschlagen. Unter einem Reisemobil soll in diesem Zusammenhang insbesondere ein Wohnmobil verstanden werden. Insbesondere weist das Reisefahrzeug eine Sitzplatzanzahl von weniger als 10 Personen auf.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Reisemobil mit einer Reisefahrzeugkarosserie in einer Seitenansicht,
- Fig. 2: die Reisefahrzeugkarosserie in einer perspektivischen Darstellung,
- Fig. 3: die Reisefahrzeugkarosserie in einer weiteren perspektivischen Darstellung,
- Fig. 4: die Reisefahrzeugkarosserie in einer Seitenansicht und

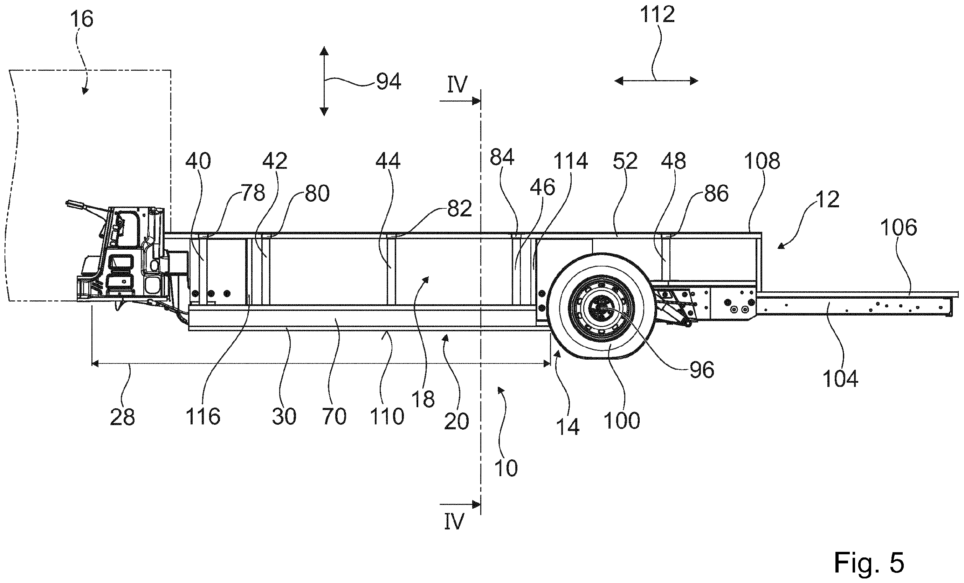

- Fig. 5: die Reisefahrzeugkarosserie in einem Schnitt durch IV - IV.

### Beschreibung des Ausführungsbeispiels

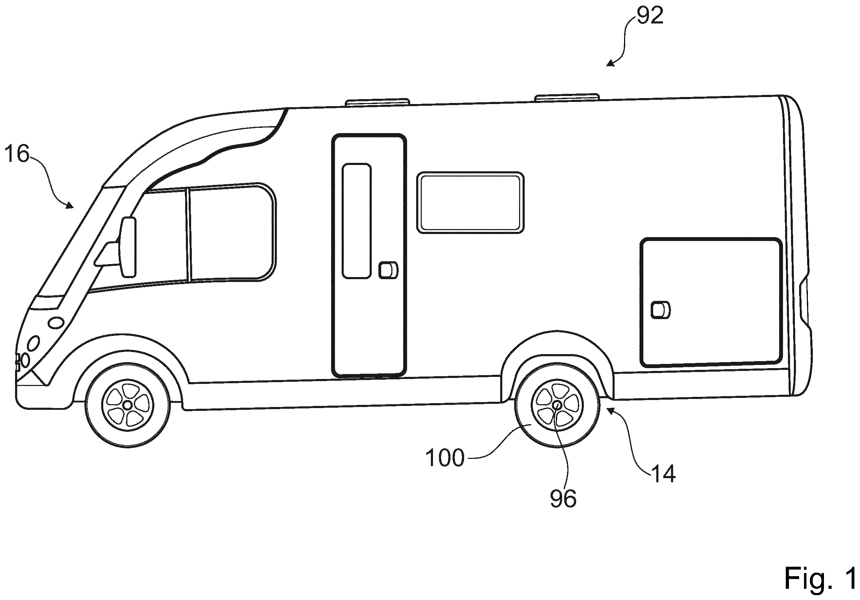

Die Figur 1 zeigt ein Reisefahrzeug 92 das als Reisemobil ausgebildet ist. Das Reisefahrzeug 92 bildet ein Wohnmobil, insbesondere ein vollintegriertes Wohnmobil aus. Das Reisefahrzeug 92 weist eine Reisefahrzeugkarosserie auf. Die Reisefahrzeugkarosserie bildet eine Reisemobilkarosserie aus. In einem Frontbereich weist das Reisefahrzeug 92 eine Fahrerkabineneinheit 16 auf. Die Fahrerkabineneinheit 16 weist eine Fahrerkabine mit einem nicht näher gezeigten Fahrersitz auf. Im Bereich der Fahrerkabineneinheit 16 ist ein nicht näher gezeigter Antriebsmotor zum Antrieb des Reisefahrzeugs 92 angeordnet. Der Antriebsmotor bildet eine Brennkraftmaschine aus. Das Reisefahrzeug 92 weist eine Hinterachseinheit 14 auf. Die Hinterachseinheit 14 umfasst eine Hinterachse 96, zwei Hinterachslager und eine Hinterachsanbindung 98. Die Hinterachse 96 ist zu einer Aufnahme von zwei Fahrzeughinterreifen 100, 102 vorgesehen. Die Hinterachseinheit 14 ist auf eine dem Fachmann bekannte Weise ausgebildet. Auf der Reisefahrzeugkarosserie ist ein Wohnaufbau aufgesetzt.

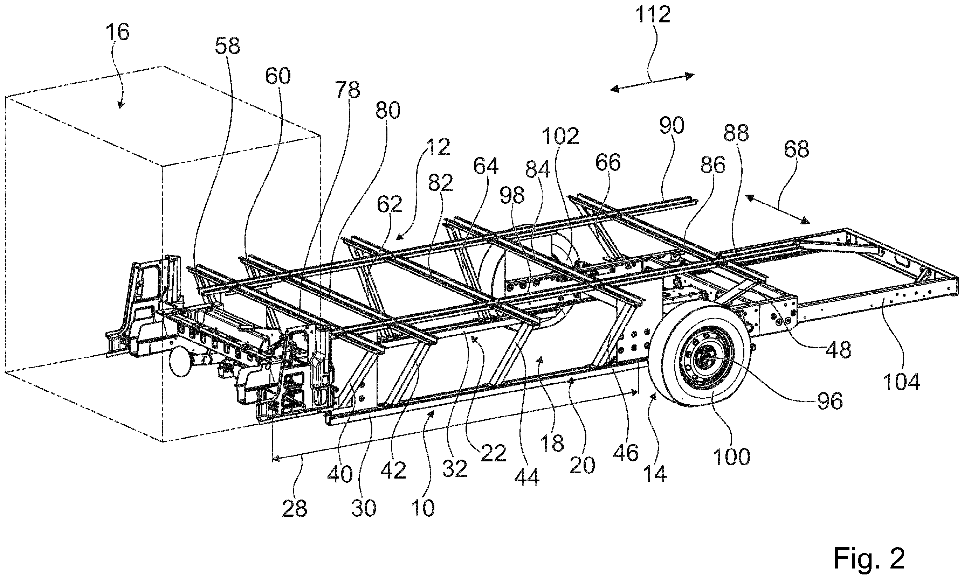

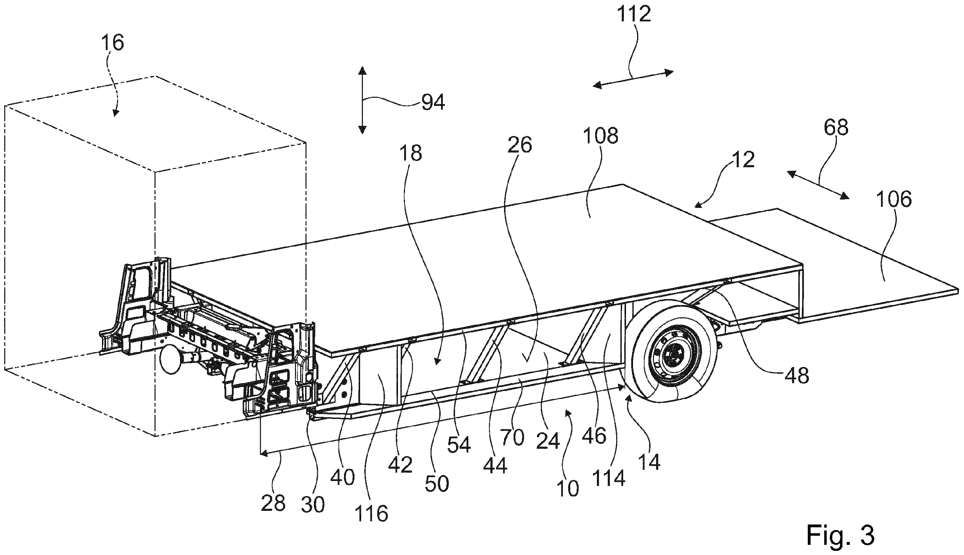

Die Reisefahrzeugkarosserie ist in den Figuren 2 und 3 näher dargestellt. Weitere Bauteile, wie insbesondere die Fahrerkabineneinheit 16 oder der Wohnaufbau sind aus Gründen der Übersichtlichkeit nicht im Detail dargestellt. Hinter der Hinterachseinheit 14 ist ein Rahmen 104 angeordnet. Der Rahmen 104 ist zum Tragen eines Heckgaragenbodens 106 vorgesehen. Der Heckgaragenboden 106 ist vollständig eben ausgebildet. Der Heckgaragenboden 106 erstreckt sich über einen Großteil einer Fahrzeugbreite. Die Reisefahrzeugkarosserie umfasst eine Unterbodeneinheit 10. Die Reisefahrzeugkarosserie umfasst eine Oberbodeneinheit 12. Die Unterbodeneinheit 10 und die Oberbodeneinheit 12 sind zu einer selbsttragenden Anbindung der Hinterachseinheit 14 an die Fahrerkabineneinheit 16 vorgesehen. Mehr als 80 % der statischen Kräfte zwischen der Hinterachseinheit 14 und der Fahrerkabineneinheit 16 werden über die Unterbodeneinheit 10 und die Oberbodeneinheit 12 geleitet.

Die Oberbodeneinheit 12 umfasst einen Oberboden 108. Der Oberboden 108 bildet einen Fussboden eines Reisefahrzeugwohnraums aus. Der Oberboden 108 ist in Leichtbauweise hergestellt. Der Oberboden 108 ist zu einem Großteil metallfrei ausgebildet. Der Oberboden 108 ist über eine vollständige Breite eben ausgebildet. Die Unterbodeneinheit 10 ist in eine Vertikalrichtung 94 versetzt zur Oberbodeneinheit 12 angeordnet. Von einem Untergrund aus betrachtet, ist die Oberbodeneinheit 12 oberhalb der Unterbodeneinheit 10 angeordnet.

Zwischen der Unterbodeneinheit 10 und der Oberbodeneinheit 12 ist ein Stauraum 18 angeordnet. Die Unterbodeneinheit 10 trennt den Stauraum 18 in Richtung eines Untergrunds. Der Stauraum 18 ist zwischen der Hinterachseinheit 14 und der Fahrerkabineneinheit 16 angeordnet. Der Stauraum 18 erstreckt sich durchgängig von einer ersten Karosserielängsseite 20 bis zu einer zweiten Karosserielängsseite 22. Die erste Karosserielängsseite 20 verläuft parallel zur zweiten Karosserielängsseite 22.

Die Unterbodeneinheit 10 weist einen Unterboden 24 auf. Der Unterboden 24 bildet eine ebene Unterbodenfläche 26 aus. Die Unterbodenfläche 26 erstreckt sich durchgehend über einen Großteil einer Erstreckung 28 von der Hinterachseinheit 14 zur Fahrerkabineneinheit 16. Der Unterboden 24 bildet eine Bodenplatte aus. Der Unterboden 24 ist in Leichtbauweise hergestellt. Der Unterboden 24 ist zumindest zu einem Großteil metallfrei ausgebildet.

Die Unterbodeneinheit 10 weist einen ersten Unterzug 30 auf. Der erste Unterzug 30 verläuft entlang der ersten Karosserielängsseite 20. Die Unterbodeneinheit 10 weist einen zweiten Unterzug 32 auf. Der zweite Unterzug 32 verläuft entlang der zweiten Karosserielängsseite 22. Die Unterzüge 30, 32 bilden jeweils eine Profilleiste aus. Die Unterzüge 30, 32 sind an einem Seitenrand des Unterbodens 24 angeordnet. Die Unterzüge 30, 32 sind dazu vorgesehen, den Unterboden 24 zu versteifen und zu tragen. Die Unterzüge 30, 32 sind aus einem Metall ausgebildet.

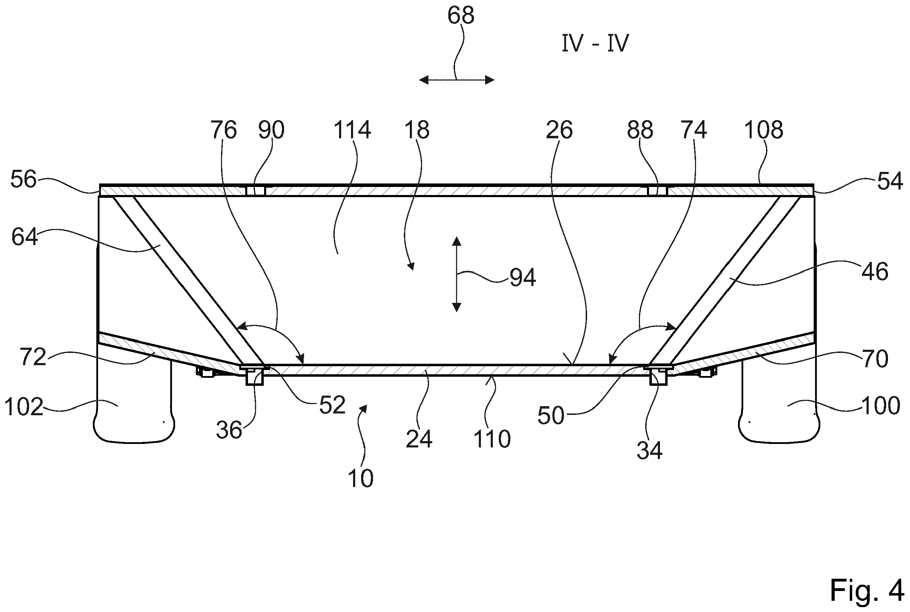

Der erste Unterzug 30 und der zweite Unterzug 32 sind im Bereich des Unterbodens 24 frei von Querstreben ausgebildet. Wie in der Figur 4 gezeigt, umfasst der Unterboden 24 eine Bodenzugausnehmung 34. Die Bodenzugausnehmung 34 ist zu einer teilweisen Aufnahme des ersten Unterzugs 30 vorgesehen. Die Bodenzugausnehmung 34 bildet eine Nut aus. Der Unterboden 24 umfasst eine weitere Bodenzugausnehmung 36. Die weitere Bodenzugausnehmung 36 ist zu einer teilweisen Aufnahme des zweiten Unterzugs 32 vorgesehen. Die weitere Bodenzugausnehmung 36 bildet eine Nut aus. Die Bodenzugausnehmung 34 ist in einer von der Unterbodenfläche 26 abgewandten Seite 110 des Unterbodens 24 angeordnet. Die weitere Bodenzugausnehmung 36 ist in einer von der Unterbodenfläche 26 abgewandten Seite 110 des Unterbodens 24 angeordnet.

Die Reisefahrzeugkarosserie umfasst eine erste Außenstrebe 40. Die erste Außenstrebe 40 erstreckt sich an der ersten Karosserielängsseite 20 von einem Außenrand 50 des Unterbodens 24 zu einem Außenrand 54 der Oberbodeneinheit 12. Die erste Außenstrebe 40 verläuft schräg zur Vertikalrichtung 94 der Unterbodenfläche 26. Die erste Außenstrebe 40 schließt einen spitzen Winkel zur Vertikalrichtung 94 der Unterbodenfläche 26 ein. Ferner schließt die erste Außenstrebe 40 in eine Längsrichtung 112 betrachtet einen rechten Winkel mit der Unterbodenfläche 26 ein. An der ersten Karosserielängsseite 20 sind vier weitere Außenstreben 42, 44, 46, 48 in Längsrichtung 112 versetzt angeordnet. Die Außenstreben 42, 44, 46, 48 sind zumindest im Wesentlichen identisch mit der ersten Außenstrebe 40 ausgebildet, weshalb auf eine nähere Beschreibung der weiteren Außenstreben 42, 44, 46, 48 verzichtet wird. Es ist in diesem Zusammenhang denkbar, dass eine andere, dem Fachmann als sinnvoll erscheinende Anzahl an Außenstreben 40, 42, 44, 46, 48 an der ersten Karosserielängsseite 20 angeordnet sind.

Die Reisefahrzeugkarosserie umfasst eine zweite Außenstrebe 58. Die zweite Außenstrebe 58 erstreckt sich an der zweiten Karosserielängsseite 22 von einem Außenrand 52 des Unterbodens 24 zu einem Außenrand 56 der Oberbodeneinheit 12. Die erste Außenstrebe 40 und die zweite Außenstrebe 58 divergieren vom Unterboden 24 in Richtung der Oberbodeneinheit 12 voneinander in eine Querrichtung 68. Die erste Außenstrebe 40 und die zweite Außenstrebe 58 schließen dabei einen Winkel von etwa 76° ein. Die zweite Außenstrebe 58 verläuft schräg zur Vertikalrichtung 94 der Unterbodenfläche 26. Die zweite Außenstrebe 58 schließt einen spitzen Winkel zur Vertikalrichtung 94 der Unterbodenfläche 26 ein. Ferner schließt die zweite Außenstrebe 58 in Längsrichtung einen rechten Winkel mit der Unterbodenfläche 26 ein. An der zweiten Karosserielängsseite 22 sind vier weitere Außenstreben 60, 62, 64, 66 in Längsrichtung 112 versetzt angeordnet. Die Außenstreben 60, 62, 64, 66 sind zumindest im Wesentlichen identisch mit der zweiten Außenstrebe 58 ausgebildet, weshalb auf eine nähere Beschreibung der weiteren Außenstreben 60, 62, 64, 66 verzichtet wird. Es ist in diesem Zusammenhang denkbar, dass eine andere, dem Fachmann als sinnvoll erscheinende Anzahl an Außenstreben an der zweiten Karosserielängsseite 22 angeordnet sind.

Die Unterbodeneinheit 10 umfasst einen ersten Seitenboden 70. Der erste Seitenboden 70 liegt am Unterboden 24 seitlich an. Der erste Seitenboden 70 schließt einen stumpfen Winkel 74 mit dem Unterboden 24 ein. Die Unterbodeneinheit 10 umfasst einen zweiten Seitenboden 72. Der zweite Seitenboden 72 liegt am Unterboden 24 seitlich an. Der zweite Seitenboden 72 schließt einen stumpfen Winkel 76 mit dem Unterboden 24 ein. Der erste Seitenboden 70 und der zweite Seitenboden 72 sind an entgegengesetzten Außenrändern 50, 52 des Unterbodens 24 angeordnet.

Die Unterbodenfläche 26 ist von der ersten Karosserielängsseite 20 bis zur zweiten Karosserielängsseite 22 und über einen Großteil der Erstreckung 28 von der Hinterachseinheit 14 zur Fahrerkabineneinheit 16 vollständig eben ausgebildet.

Die Oberbodeneinheit 12 umfasst zwei Oberzüge 88, 90. Die Oberzüge 88, 90 bilden jeweils eine Profilleiste aus. Die Oberzüge 88, 90 sind in den Oberboden 108 eingelassen. Die Oberzüge 88, 90 sind dazu vorgesehen, den Oberboden 108 zu versteifen und zu tragen. Die Oberzüge 88, 90 sind aus einem Metall ausgebildet. Es ist in diesem Zusammenhang denkbar, dass die Unterzüge 30, 32 mit den Oberzügen 88, 90 über nicht näher gezeigte, vertikal verlaufende Streben verbunden sind.

Die Oberbodeneinheit 12 umfasst mehrere Querstreben 78, 80, 82, 84, 86, die zu einer Verbindung der beiden Oberzüge 88, 90 vorgesehen sind. Die Querstreben 78, 80, 82, 84, 86 ragen seitlich über die Unterbodenfläche 26 heraus. Die Reisefahrzeugkarosserie weist eine Querwandung 114 auf. Die Querwandung 114 erstreckt sich zumindest im Wesentlichen senkrecht zur Längsrichtung 112. Die Querwandung 114 schließt den Stauraum 18 heckseitig ab. Die Reisefahrzeugkarosserie weist eine weitere Querwandung 116 auf. Die weitere Querwandung 116 erstreckt sich zumindest im Wesentlichen senkrecht zur Längsrichtung 112. Die weitere Querwandung 116 schließt den Stauraum 18 frontseitig ab. Die Unterbodeneinheit 10 ist mit der Hinterachsanbindung 98 verbunden.

## Patentansprüche

1. Reisefahrzeugkarosserie, insbesondere Reisemobilkarosserie, mit zumindest einer Unterbodeneinheit (10) und mit zumindest einer Oberbodeneinheit (12), die insbesondere zu einer selbsttragenden Anbindung einer Hinterachseinheit (14) an eine Fahrerkabineneinheit (16) vorgesehen sind, und die einen Stauraum (18) begrenzen, der zumindest teilweise zwischen der Hinterachseinheit (14) und der Fahrerkabineneinheit (16) angeordnet ist und der sich in zumindest einem Bereich durchgängig von einer ersten Karosserielängsseite (20) bis zu einer zweiten Karosserielängsseite (22) erstreckt, wobei die Unterbodeneinheit (10) einen Unterboden (24) aufweist, der eine zumindest im Wesentlichen ebene Unterbodenfläche (26) ausbildet, die sich durchgehend über zumindest einen Großteil einer Erstreckung (28) von der Hinterachseinheit (14) zur Fahrerkabineneinheit (16) erstreckt, wobei die Unterbodeneinheit (10) einen ersten Unterzug (30) aufweist, der entlang der ersten Karosserielängsseite (20) verläuft und wobei die Unterbodeneinheit einen zweiten Unterzug (32) aufweist, der entlang der zweiten Karosserielängsseite (22) verläuft, wobei der erste Unterzug (30) und der zweite Unterzug (32) zumindest im Bereich des Unterbodens (24) frei von Querstreben ausgebildet sind, **gekennzeichnet durch** zumindest eine erste Außenstrebe (40, 42, 44, 46, 48), die sich an der ersten Karosserielängsseite (20) von einem Außenrand (50) des Unterbodens (24) zu einem Außenrand (54) der Oberbodeneinheit (12) erstreckt, wobei die zumindest eine erste Außenstrebe (40, 42, 44, 46, 48) schräg zu einer Vertikalrichtung (94) der Unterbodenfläche (26) verläuft.

2. Reisefahrzeugkarosserie nach Anspruch 1,
**dadurch gekennzeichnet, dass**
der Unterboden (24) zumindest eine Bodenzugausnehmung (34) umfasst, die zu einer zumindest teilweisen Aufnahme des ersten Unterzugs (30) vorgesehen ist.

3. Reisefahrzeugkarosserie nach Anspruch 1 oder 2,
**gekennzeichnet durch**
zumindest eine zweite Außenstrebe (58, 60, 62, 64, 66), die sich an der zweiten Karosserielängsseite (22) von einem Außenrand (52) des Unterbodens (24) zu einem Außenrand (56) der Oberbodeneinheit (12) erstreckt, wobei die zumindest eine erste Außenstrebe (40, 42, 44, 46, 48) und die zumindest eine zweite Außenstrebe (58, 60, 62, 64, 66) vom Unterboden (24) in Richtung der Oberbodeneinheit (12) voneinander in eine Querrichtung (68) divergieren.

4. Reisefahrzeugkarosserie nach einem der vorhergehenden Ansprüche,
**dadurch gekennzeichnet, dass**
die Unterbodeneinheit (10) zumindest einen ersten Seitenboden (70, 72) umfasst, der am Unterboden (24) seitlich anliegt und einen stumpfen Winkel (74, 76) mit dem Unterboden (24) einschließt.

5. Reisefahrzeugkarosserie nach einem der vorhergehenden Ansprüche,
**dadurch gekennzeichnet, dass**
die Unterbodenfläche (26) von der ersten Karosserielängsseite (20) bis zur zweiten Karosserielängsseite (22) und über zumindest einen Großteil der Erstreckung (28) von der Hinterachseinheit (14) zur Fahrerkabineneinheit (16) vollständig eben ausgebildet ist.

6. Reisefahrzeugkarosserie nach einem der vorhergehenden Ansprüche,
**dadurch gekennzeichnet, dass**
die Oberbodeneinheit (12) zumindest eine Querstrebe (78, 80, 82, 84, 86) umfasst, die zu einer Verbindung zweier Oberzüge (88, 90) vorgesehen sind, und die seitlich über die Unterbodenfläche (26) herausragen.

7. Reisefahrzeug (92), insbesondere Reisemobil, mit einer Reisefahrzeugkarosserie nach einem der vorhergehenden Ansprüche.

## Claims

1. Travel vehicle body, in particular motor home body, with at least one underbody unit (10) and with at least one upper bottom unit (12), in particular configured for a self-supporting connection of a rear axle unit (14) to a driver's cab unit (16) and delimiting a stowage space (18) that is arranged at least partially between the rear axle unit (14) and the driver's cab unit (16) and that extends in at least one region continuously from a first longitudinal body side (20) to a second longitudinal body side (22),
the underbody unit (10) comprising an underbody (24) which forms an at least substantially planar underbody surface (26) extending continuously over at least a large portion of an extension (28) from the rear axle unit (14) to the driver's cab unit (16),
wherein the underbody unit (10) comprises a first lower beam (30) extending along the first longitudinal body side (20) and
wherein the underbody unit (10) comprises a second lower beam (32) extending along the second longitudinal body side (22),
the first lower beam (30) and the second lower beam (32) being realised, at least in a region of the underbody (24), free of transverse bars,
**characterised by** at least one first exterior bar (40, 42, 44, 46, 48) extending on the first longitudinal body side (20) from an outer edge (50) of the underbody (24) to an outer edge (54) of the upper bottom unit (12), wherein the at least one first exterior bar (40, 42, 44, 46, 48) runs obliquely with respect to a vertical direction (94) of the underbody surface (26).

2. Travel vehicle body according to claim 1,
**characterised in that** the underbody (24) comprises at least one bottom beam recess (34), which is configured for an at least partial accommodation of the first lower beam (30).

3. Travel vehicle body according to claim 1 or 2,
**characterised by** at least one second exterior bar (58, 60, 62, 64, 66) extending on the second longitudinal body side (22) from an outer edge (52) of the underbody (24) to an outer edge (56) of the upper bottom unit (12), wherein the at least one first exterior bar (40, 42, 44, 46, 48) and the at least one second exterior bar (58, 60, 62, 64, 66) diverge from one another from the underbody (24) towards the upper bottom unit (12) in a transverse direction (68).

4. Travel vehicle body according to one of the preceding claims,
**characterised in that** the underbody unit (10) comprises at least one first lateral bottom (70, 72), which is laterally adjacent to the underbody (24) and includes an obtuse angle (74, 76) with the underbody (24).

5. Travel vehicle body according to one of the preceding claims,
**characterised in that** the underbody surface (26) is embodied to be completely planar from the first longitudinal body side (20) to the second longitudinal body side (22) and over at least a large portion of the extension (28) from the rear axle unit (14) to the driver's cab unit (16).

6. Travel vehicle body according to one of the preceding claims,
**characterised in that** the upper bottom unit (12) comprises at least one transverse bar (78, 80, 82, 84, 86), which are configured for connecting two upper beams (88, 90) and which protrude sidewise beyond the underbody surface (26).

7. Travel vehicle (92), in particular motor home, with a travel vehicle body according to one of the preceding claims.

## Revendications

1. Carrosserie de véhicule de tourisme, en particulier carrosserie de camping-car, avec au moins une unité plancher inférieur (10) et avec au moins une unité plancher supérieur (12), qui sont prévues particulièrement pour un raccordement autoporteur d'une unité d'essieu arrière (14) à une unité de cabine du conducteur (16) et qui délimitent un espace de rangement (18) disposé au moins partiellement entre l'unité d'essieu arrière (14) et l'unité de cabine du conducteur (16) et s'étendant, en au moins une région, continûment d'un premier côté longitudinal de carrosserie (20) jusqu'à un deuxième côté longitudinal de carrosserie (22), l'unité plancher inférieur (10) comprenant un plancher inférieur (24) formant une surface de plancher inférieur (26) au moins sensiblement planaire, qui s'étend continûment à travers d'au moins une grande partie d'une extension (28) de l'unité d'essieu arrière (14) jusqu'à l'unité de cabine du conducteur (16),
l'unité plancher inférieur (10) comprenant une première barre inférieure (30) s'étendant le long du premier côté longitudinal de carrosserie (20) et l'unité plancher inférieur (10) comprenant une deuxième barre inférieure (32) s'étendant le long du deuxième côté longitudinal de carrosserie (22), où la première barre inférieure (30) et la deuxième barre inférieure (32) sont réalisées, au moins dans une zone du plancher inférieur (24), libres de traverses,
**caractérisé par** au moins une première traverse extérieure (40, 42, 44, 46, 48) s'étendant au premier côté longitudinal de carrosserie (20) d'un bord extérieur (50) du plancher inférieur (24) jusqu'à un bord extérieur (54) de l'unité plancher supérieur (12), l'au moins une première traverse extérieure (40, 42, 44, 46, 48) s'étendant obliquement par rapport à une direction verticale (94) de la surface de plancher inférieur (26).

2. Carrosserie de véhicule de tourisme selon la revendication 1,
**caractérisé en ce que** le plancher inférieur (24) comporte au moins une échancrure à barre de plancher (34), qui est prévue pour recevoir la première barre inférieure (30) au moins partiellement.

3. Carrosserie de véhicule de tourisme selon l'une quelconque des revendications 1 ou 2,
**caractérisé par** au moins une deuxième traverse extérieure (58, 60, 62, 64, 66) s'étendant au deuxième côté longitudinal de carrosserie (22) d'un bord extérieur (52) du plancher inférieur (24) jusqu'à un bord extérieur (56) de l'unité plancher supérieur (12), l'au moins une première traverse extérieure (40, 42, 44, 46, 48) et l'au moins une deuxième traverse extérieure (58, 60, 62, 64, 66) divergeant l'une de l'autre, dans une direction transversale (68), du plancher inférieur (24) vers l'unité plancher supérieur (12).

4. Carrosserie de véhicule de tourisme selon l'une quelconque des revendications précédentes,
**caractérisé en ce que** l'unité plancher inférieur (10) comporte au moins un premier plancher latéral (70, 72) jouxtant latéralement le plancher inférieur (24) et incluant un angle obtus (74, 76) avec le plancher inférieur (24).

5. Carrosserie de véhicule de tourisme selon l'une quelconque des revendications précédentes,
**caractérisé en ce que** la surface de plancher inférieur (26) est réalisée entièrement planaire du premier côté longitudinal de carrosserie (20) jusqu'au deuxième côté longitudinal de carrosserie (22) et sur au moins une grande partie de l'extension (28) de l'unité d'essieu arrière (14) jusqu'à l'unité de cabine du conducteur (16).

6. Carrosserie de véhicule de tourisme selon l'une quelconque des revendications précédentes,
**caractérisé en ce que** l'unité plancher supérieur (12) comporte au moins une traverse (78, 80, 82, 84, 86) configurée pour un raccordement de deux barres supérieures (88, 90) et dépassant latéralement la surface de plancher inférieur (26).

7. Véhicule de tourisme (92), en particulier camping-car, avec une carrosserie de véhicule de tourisme selon l'une quelconque des revendications précédentes.
